# FASCICULE DE BREVET EUROPEEN

(11) **EP 2 292 511 B1**
(45) Date de publication et mention de la délivrance du brevet: **27.03.2013**
(21) Numéro de dépôt: 10305948.1
(22) Date de dépôt: 03.09.2010
(51) Int. Cl.: B63H 23/24

(54) **Chaîne de propulsion**
Antriebssystem
Propusion system

(30) Priorité: 04.09.2009 FR 0904226
(43) Date de publication de la demande: 09.03.2011
(73) Titulaire: Converteam Technology Ltd, Rugby Warwickshire CV21 1BU (GB)
(72) Inventeur: Frizon, Jean-Marie, 70400 Châlonvillars (FR); Viard, André, 90300 Cravanche (FR); Julliand, Lionel, 90500 Beaucourt (FR)
(74) Mandataire: Blot, Philippe Robert Emile

(56) Documents cités:
- JP-A- 59 018 216
- US-A1- 2008 315 583

## Description

La présente invention concerne une chaîne de propulsion du type comportant :
- un moteur thermique principal,
- au moins une centrale de production d'énergie électrique secondaire alimentant un tableau de distribution ;
- au moins une ligne d'arbre pourvue d'une hélice d'extrémité et accouplée mécaniquement au moteur thermique principal pour son entraînement,
- au moins une machine électrique tournante accouplée mécaniquement à la ligne d'arbre et alimentée depuis le tableau de distribution,
- un moyen d'accouplement mécanique libérable du moteur thermique principal et de la machine électrique tournante disposé sur la ligne d'arbre, entre la machine électrique tournante et le moteur thermique principal.

Les navires de forts tonnages sont couramment équipés d'un moteur diesel produisant l'énergie nécessaire à l'entraînement de la ligne d'arbre et de l'hélice immergées. Le moteur diesel est relié de manière permanente à la ligne d'arbre pour l'entraînement de l'hélice tournant à la même vitesse que le moteur.

En outre, il est connu d'accoupler mécaniquement à la ligne d'arbre une machine électrique tournante, laquelle est susceptible de recevoir de l'énergie électrique qu'elle convertit en énergie mécanique afin d'assurer un apport supplémentaire d'énergie mécanique pour l'entraînement de l'hélice.

Suivant un autre mode de fonctionnement, la machine tournante est utilisée en générateur pour produire de l'énergie électrique à partir de l'énergie mécanique fournie par le moteur thermique principal.

Le navire comporte par ailleurs une centrale secondaire de production d'énergie électrique incluant au moins un moteur thermique auxiliaire accouplé à un alternateur propre à convertir l'énergie mécanique de sortie du moteur secondaire en énergie électrique, et éventuellement un système de récupération d'énergie sur les gaz d'échappement du moteur principal qui alimente un autre alternateur. Le moteur thermique secondaire est de préférence un moteur diesel rapide, à quatre temps alimenté avec du diesel léger MDO (Marine Diesel Oil) ou du gaz naturel (GNL). Pour l'entraînement de la machine tournante accouplée mécaniquement à la ligne d'arbre, l'énergie électrique fournie par la centrale secondaire de production d'énergie peut être utilisée.

Les navires équipés d'une telle chaîne de propulsion permettent une gestion optimisée de l'énergie fournie par le moteur principal et par la centrale secondaire de production d'énergie, en ce sens que le moteur principal peut être utilisé pour fournir de l'énergie électrique à bord du navire et la centrale secondaire de production d'énergie peut être utilisée pour participer à la propulsion du navire par l'intermédiaire de la machine tournante qui contribue, en plus du moteur thermique principal, à l'entraînement de l'hélice.

Le document US 2008/0315583 est consideré comme étant l'état de la technique le plus proche et décrit une installation avec les caractéristiques du préamble de la revendication 1.

Toutefois, une telle chaîne de propulsion peut s'avérer surdimensionnée et polluante pour l'entraînement du navire dans certaines circonstances, notamment lors de l'entrée et de la sortie des ports, ou lors d'utilisation du navire à vitesse réduite.

Pour ces circonstances particulières de fonctionnement, il est connu de prévoir sur la ligne d'arbre entre le moteur thermique principal et la machine tournante des moyens d'accouplement libérable qui permettent de désaccoupler le moteur thermique principal et de n'utiliser que la machine tournante pour l'entrée ou la sortie des ports.

Pour l'engagement ou la libération des moyens d'accouplement, il est nécessaire d'agir manuellement sur les moyens d'accouplement, notamment pour retirer ou ajouter des éléments mécaniques tels que des boulons. Cette intervention nécessite l'arrêt du moteur thermique et de la machine tournante. Ainsi, l'engagement ou la libération des moyens d'accouplement est consommateur de temps.

L'invention a pour but de proposer une chaîne de propulsion d'un navire permettant une gestion optimale de l'énergie et des émissions, tant lorsque le navire est en route libre ou dans des zones réglementées que lorsqu'il manoeuvre dans un port qui soit rapide d'utilisation.

A cet effet, l'invention a pour objet une chaîne de propulsion du type précité, **caractérisée en ce qu**'elle comporte des moyens de synchronisation des vitesses de la machine électrique tournante et du moteur thermique principal avant l'accouplement de la machine électrique tournante et du moteur thermique principal et des moyens d'engagement des moyens d'accouplement lorsque les vitesses de la machine électrique tournante et du moteur thermique principal sont sensiblement égales.

Suivant des modes particuliers de réalisation, la chaîne de propulsion pour navire comporte l'une ou plusieurs des caractéristiques suivantes :
- le moteur thermique principal est un moteur 2 temps ;
- un palier-butée propre à transmettre une poussée suivant l'axe de la ligne d'arbre à la coque du navire est installé entre l'hélice et le moyen d'accouplement mécanique libérable ;
- le palier-butée est intégré à la machine électrique tournante ;
- le moyen d'accouplement mécanique libérable du moteur thermique principal et de la machine électrique tournante est un embrayage ;
- la chaîne de propulsion comporte une unité de pilotage propre à assurer, lors de phases de manoeuvre du navire, une déconnexion mécanique du moteur thermique principal de la ligne d'arbre par libération du moyen d'accouplement mécanique et une alimentation en courant électrique de la machine tournante grâce à l'énergie fournie par le tableau de distribution et issue de la centrale de production d'énergie électrique secondaire ;
- la ligne d'arbre est reliée, sans réducteur de vitesse, au moteur thermique, de sorte que l'hélice est entraînée en rotation à la vitesse de rotation du moteur thermique principal ;
- la chaîne de propulsion comporte un convertisseur réversible de mise en forme du courant électrique relié entre la machine électrique tournante et le tableau de distribution électrique, lequel tableau de distribution électrique est relié en outre à un réseau de distribution électrique du navire ;
- la chaîne de propulsion comporte une turbine de récupération d'énergie sur l'échappement du moteur thermique principal, laquelle turbine est accouplée mécaniquement à un alternateur dont la sortie d'alimentation électrique est reliée au tableau de distribution électrique ;
- la machine électrique tournante comporte un rotor monté autour de l'axe de la ligne d'arbre ;
- les moyens de synchronisation comportent des moyens de réglage du couple de consigne de la machine électrique tournante ;
- les moyens de synchronisation comportent des capteurs de vitesse mesurant les vitesses de rotation du moteur thermique principal et de la machine tournante ;
- les moyens de synchronisation comportent des capteurs de position disposés sur le moteur thermique principal et la machine tournante ; et
- la chaîne de propulsion comporte des moyens de synchronisation des positions angulaires relatives de la machine électrique tournante et du moteur thermique principal avant l'accouplement de la machine électrique tournante et du moteur thermique principal, les moyens d'engagement des moyens d'accouplement sont adaptés pour assurer l'engagement des moyens d'accouplement lorsque les positions angulaires de la machine électrique tournante et du moteur thermique principal sont dans des positions relatives prédéterminées.

L'invention a également pour objet un navire comportant une coque et une chaîne de propulsion telle que définie ci-dessus.

L'invention sera mieux comprise à la lecture de la description qui va suivre, donnée uniquement à titre d'exemple et faite en se référant aux dessins sur lesquels :
- la figure 1 qui est une vue schématique en coupe longitudinale de la partie arrière de la coque d'un navire équipé d'une chaîne de propulsion selon l'invention ;
- la figure 2 est une vue schématique de la chaîne de commande de la chaîne de propulsion représentée sur la figure 1 ; et
- la figure 3 est un organigramme de la commande de la chaîne de propulsion de la figure 2 lors de l'enclenchement des moyens d'accouplement.

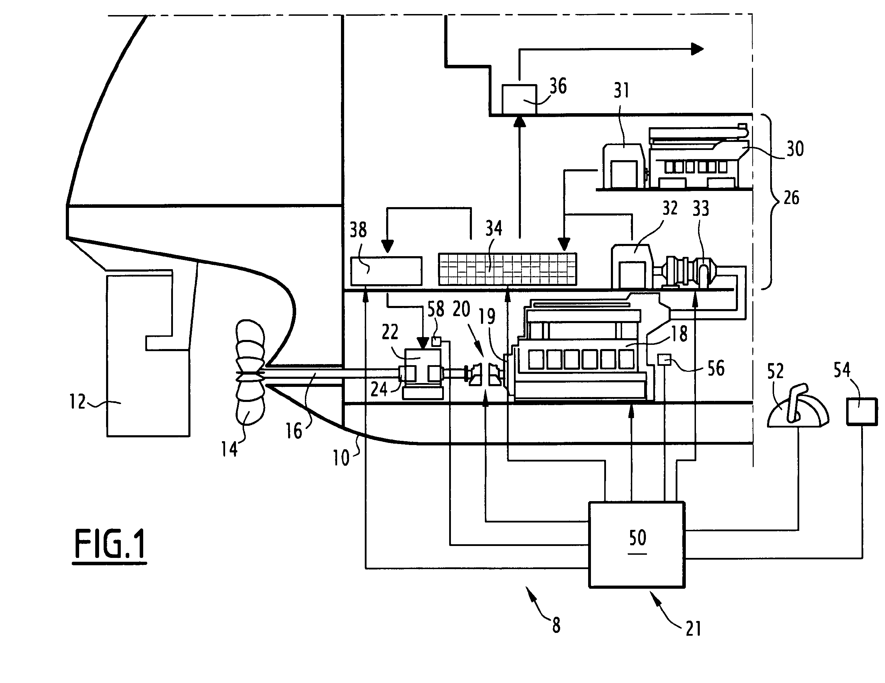

Le navire 8 partiellement illustré sur la figure 1 comporte une coque 10 équipée à son extrémité arrière d'un safran 12 en avant duquel est montée une hélice de propulsion 14. Cette hélice est fixée à l'extrémité d'une ligne d'arbre 16 pénétrant dans la coque. A son autre extrémité, la ligne d'arbre 16 est reliée en prise directe à la sortie d'un moteur thermique principal 18 d'entraînement de la ligne d'arbre. Ce moteur est de préférence un moteur diesel et avantageusement un moteur diesel dit «lent», c'est-à-dire un moteur deux temps dont la vitesse de rotation est inférieure à 150 tours/minute. Le moteur est apte à être alimenté avec du fuel lourd, tel que du « Heavy Fuel Oil » (HFO) ou du « Intermediate Fuel Oil » (IFO).

Le moteur 18 comporte, comme connu en soi, un palier butée 19 propre à assurer la transmission vers la coque 10, de la poussée axiale issue de l'hélice et imposée à l'arbre.

La ligne d'arbre 16 est reliée au moteur 18 par un moyen d'accouplement mécanique libérable 20 constitué par exemple d'un embrayage commandable, permettant d'assurer sélectivement l'accouplement mécanique ou le désaccouplement mécanique de la ligne d'arbre 16 et du moteur 18.

Un système 21 de commande de l'accouplement est relié au moyen d'accouplement 20 pour sa commande.

Une machine électrique tournante 22 est prévue sur la ligne d'arbre 16, entre l'embrayage 20 et l'hélice 14, le rotor de la machine tournante 22 est solidarisé directement à la ligne d'arbre autour de l'axe de la ligne d'arbre 16 sans réducteur de vitesse. Son stator est disposé autour de la ligne d'arbre et est solidarisé à la coque du navire.

La machine électrique tournante 22 étant montée directement sur l'arbre, aucune boîte de pignons ou réducteur n'est prévu entre la ligne d'arbre 16 et la machine tournante 22.

La ligne d'arbre 16 comporte, entre l'hélice 14 et l'embrayage 20, un palier butée complémentaire 24 de transmission de la force de poussée issue de l'hélice à la coque du navire. En position « désaccouplé », la butée 24 permet néanmoins la transmission vers la coque 10, d'une poussée axiale bidirectionnelle d'environ 30% de la poussée nominale. Ceci permet donc l'utilisation de la machine électrique tournante 22 alors que le moteur principal 18 est à l'arrêt ou en séquence de virage pour la maintenance.

La ligne d'arbre 16 étant reliée en prise directe au moteur, aucun réducteur de vitesse n'est prévu entre l'hélice et le moteur 18, de sorte que, lorsque l'embrayage 20 assure un accouplement mécanique, le moteur principal 18 et l'hélice 14 tournent à la même vitesse.

Le navire comporte par ailleurs une centrale secondaire 26 de production d'énergie électrique. La centrale secondaire 26 de production d'énergie est de préférence peu polluante. En particulier, les émissions de gaz polluant (CO₂, NO_{X}, etc...) sont réduites ou nulles. Elle comporte à cet effet, par exemple, des générateurs solaires ou éoliens ou utilise de l'hydrogène ou du gaz naturel liquide (LNG) comme carburant.

Dans le mode de réalisation envisagé, cette centrale 26 comporte au moins un moteur thermique secondaire 30 accouplé à au moins un alternateur 31 propre à convertir l'énergie mécanique de sortie du moteur secondaire en énergie électrique. Le moteur thermique secondaire 30 est de préférence un moteur diesel rapide, à quatre temps alimenté avec du diesel léger ou du gaz naturel.

La centrale 26 comporte en outre un alternateur 32 relié mécaniquement à une turbine 33 de récupération de la chaleur des gaz d'échappement du moteur thermique principal 18.

Cette turbine est propre à être entraînée par les gaz d'échappement et à entraîner l'alternateur 32.

Les alternateurs 31 et 32 sont reliés à un tableau de distribution principal 34 lui-même relié à un réseau 36 d'alimentation électrique du bord ainsi qu'à un convertisseur de puissance électrique réversible 38. Le tableau de distribution 34 est propre à distribuer la puissance électrique venant des alternateurs 31 et 32 vers l'un et/ou l'autre du réseau 36 et du convertisseur 38.

Le convertisseur 38 est relié électriquement à la machine tournante 22 pour son alimentation ou pour recueillir de l'énergie électrique produite par celle-ci. Le convertisseur 38 est propre à la mise en forme du courant pour permettre l'alimentation électrique de la machine tournante 22 afin que celle-ci fonctionne en moteur et assurer l'entraînement de l'hélice 14 avec un couple déterminé. Il est propre également à mettre en forme le courant produit par la machine électrique tournante 22 pour l'injecter dans le réseau 36 lorsque celle-ci fonctionne en générateur.

Les moteurs 18, 30, la turbine 33, le tableau de distribution 34, le convertisseur 38, la machine électrique tournante 22 sont reliés au poste de commande du navire et, de préférence, à une même unité centrale de traitement d'informations 50 permettant leur commande individuelle.

L'unité centrale de traitement d'informations 50 constitue également l'élément de pilotage du système de commande 21.

A cet effet, l'unité 50 est reliée aux moyens d'accouplement 20 pour leur enclenchement ou leur désenclenchement.

Pour la commande du navire, l'unité 50 est reliée à un levier de commande 52 permettant de définir une vitesse de consigne pour la rotation de l'hélice. De même, l'unité 50 est reliée à un commutateur 54 permettant de définir l'état enclenché ou désenclenché des moyens d'accouplement 20.

Des capteurs de vitesse de rotation et /ou de position angulaire du moteur thermique principal 18 et de la machine électrique tournante 22 sont prévus dans l'installation. Plus spécifiquement, le système 21 de commande de l'accouplement comporte un capteur 56 de détermination de la vitesse N_{réel}18 de rotation et / ou de position angulaire du moteur thermique principal 18 ainsi qu'un capteur 58 de détermination de la vitesse N_{réel}22 de rotation et/ou de position angulaire de la machine électrique tournante 22. Ces capteurs 56, 58 sont placés en interface avec la partie tournante du moteur et de la machine électrique tournante. Ils sont reliés chacun à l'unité de traitement d'informations 50.

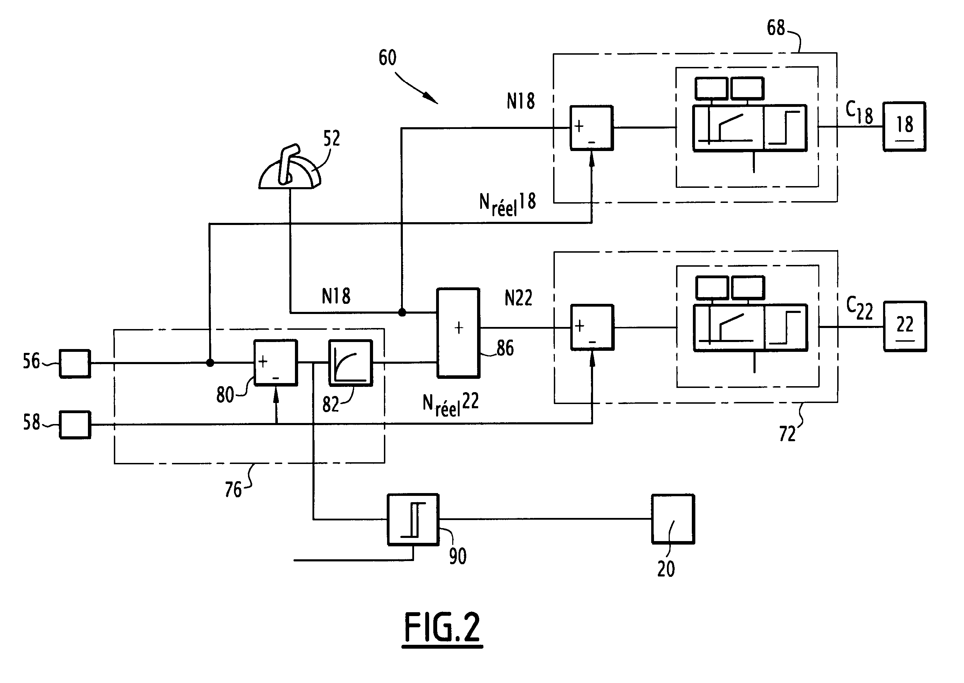

Sur la figure 2, est illustrée la chaîne de commande 60 du moteur 18 et de la machine électrique tournante 22 lors des phases d'enclenchement des moyens d'accouplement 20. Cette chaîne de commande est mise en oeuvre uniquement lorsque le commutateur 54 est placé dans la position d'engagement des moyens d'accouplement.

Sur cette figure, on retrouve le moteur thermique principal 18, la machine électrique tournante 22 et les moyens de accouplement 20, ainsi que le levier de commande 52 et les capteurs de vitesse 56 et 58 associés respectivement au moteur thermique principal 18 et à la machine électrique tournante 22.

Le moteur 18 et la machine 22 sont chacun associés à une unité de régulation de vitesse notée respectivement 68, 72 recevant chacune en entrée une vitesse de rotation de consigne notée N18 et N22. Elles reçoivent en outre l'indication de la vitesse effective de rotation notée respectivement N_{réel}18 et N_{réel}22 pour le moteur thermique principal 18 et à la machine électrique tournante 22.

Chaque unité de régulation 68, 72 met en oeuvre un algorithme de régulation connu en soi pour fournir une commande de couple notée C18, C22 appliquée respectivement au moteur 18 et à la machine tournante 22.

La vitesse de rotation de consigne N18 est issue directement du levier de commande 52.

La chaîne de commande 60 comporte une unité de synchronisation de vitesse 76 recevant en entrée les vitesses de rotation réelles N_{réel}18 et N_{réel}22 du moteur thermique principal 18 et de la machine électrique tournante 22.

Cette unité de synchronisation 76 comporte un soustracteur 80 propre à calculer la différence de vitesse entre le moteur 18 et la machine électrique tournante 22 ainsi qu'un module de filtration 82. Le signal filtré est adressé à un sommateur 86 assurant la sommation de la différence de vitesse filtrée et de la consigne de vitesse N18 pour le moteur thermique 18 tel que produite par le levier de commande 52. Le signal obtenu en sortie du sommateur 86 est appliqué à l'entrée de l'unité de régulation 72 en tant que vitesse de consigne N22 de la machine tournante 22.

Enfin, la chaîne de synchronisation 60 comporte un comparateur à hystérésis 90 recevant une valeur de seuil de référence nulle sur une première entrée et sur une seconde entrée le résultat de la différence des vitesses de rotation issues du soustracteur 80. La sortie de ce comparateur est reliée aux moyens d'accouplement 20 pour leur enclenchement lorsque la différence des vitesses de rotation est nulle.

Lorsque le navire est en route libre, l'entraînement de l'hélice 14 est assuré par le moteur principal 18. A cet effet, l'embrayage 20 est accouplé, assurant une transmission de la puissance mécanique du moteur 18 jusqu'à l'hélice. En régime de croisière, ou lors des phases nécessitant une vitesse rapide du navire, la machine tournante 22 est alimentée depuis l'énergie électrique produite de préférence par l'alternateur 31 entraîné par la turbine 33 et éventuellement par l'alternateur 32 entraîné par le moteur thermique secondaire 30, conduisant à une augmentation de la puissance mécanique fournie à l'hélice depuis la ligne d'arbre 16.

Avantageusement, lorsque le navire est en route libre, la puissance de propulsion produite par la machine tournante 22 peut être régulée par le système de contrôle du convertisseur 38 afin d'utiliser le moteur thermique secondaire à son point de fonctionnement le plus optimisé en limitant si besoin la puissance de propulsion du moteur 18, ce qui permet également de réduire les émissions polluantes.

Avantageusement, lorsque le navire est en route libre, la machine tournante 22 peut être, suivant un mode de fonctionnement, utilisée en tant que génératrice et produit de l'énergie électrique réinjectée dans le réseau du navire par l'intermédiaire du système de conversion d'énergie 38.

Dans les zones réglementées ou dans les phases de manoeuvre du navire, et notamment dans les ports, alors que le navire avance à plus faible vitesse, le moteur principal 18 est désaccouplé de la ligne d'arbre, par l'intermédiaire de l'embrayage 20 qui est libéré. Le moteur principal 18 est à l'arrêt ou en séquence de virage de maintenance. L'entraînement de l'hélice 14 est alors assuré seulement par la machine tournante 22 par l'énergie électrique fournie par l'alternateur 32 entraîné par le seul moteur thermique secondaire 30 qui est de nature moins polluant grâce à l'utilisation de combustible limitant les émissions polluantes ( fuel léger MDO ou gaz naturel GNL).

Dans ce mode de fonctionnement, l'énergie consommée par le navire est réduite au seul carburant nécessaire pour l'alimentation du moteur thermique secondaire. Le moteur principal 18 étant désaccouplé de la ligne d'arbre, celui-ci ne constitue pas une charge et toute l'énergie peut être appliquée à l'hélice 14. Dans ces conditions, la consommation énergétique est réduite et la pollution atmosphérique due aux fumées d'échappement des moteurs diesel est réduite à la seule fumée du moteur thermique secondaire 30.

Lorsque le navire atteint la haute mer, et que le moteur principal 18 doit être accouplé à l'hélice, le système de commande 21 de l'accouplement est utilisé en oeuvre.

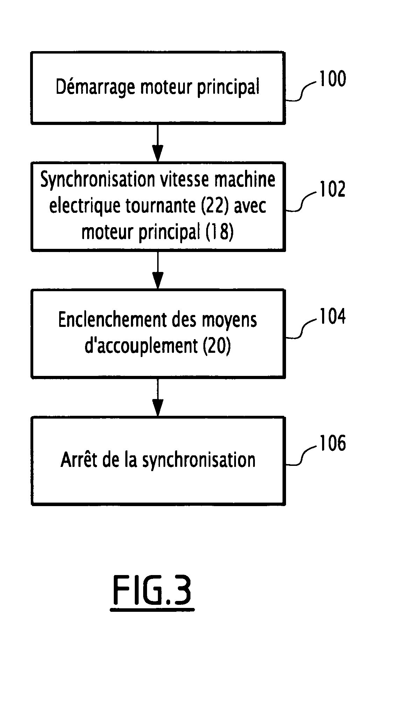

A cet effet, l'algorithme de la figure 3 est mis en oeuvre automatiquement par l'unité centrale de traitement d'informations 50. Cet algorithme est déclenché par la commutation du commutateur 54 dans la position enclenchée de l'accouplement, alors que le navire est propulsé initialement par la seule machine tournante 22.

A l'étape 100, le moteur thermique principal 18 est mis en marche à une vitesse prédéterminée correspondant par exemple à 30 % de la vitesse normale du navire en route. Cette vitesse est réglée à partir de la manette de commande 52.

A l'étape 102, la vitesse de rotation de la machine électrique tournante 22 est synchronisée avec celle du moteur thermique principal 18. A cet effet, la consigne C22 de la machine tournante 22 est ajustée pour que la vitesse de rotation N22 de la machine soit rigoureusement égale à celle N18 du moteur thermique 18 à partir de la chaîne de régulation illustrée sur la figure 2. A cet effet, le convertisseur 38 est piloté en conséquence par l'unité de traitement d'informations 50.

Dans la chaîne de commande 60, l'unité 76 calcule la différence de vitesse entre les deux machines et cette différence, dans le sommateur 86, est ajoutée à la consigne de vitesse N18 du moteur pour produire une consigne de vitesse corrigée N22 pour la machine tournante 22, laquelle est appliquée par l'unité de régulation 72.

Lorsque les deux vitesses sont égales, ainsi que déterminé par le comparateur 80, les moyens d'accouplement 20 sont pilotés pour leur engagement à l'étape 104.

A l'étape 106, la chaîne de synchronisation est arrêtée et, par des mécanismes connus en soi, la machine tournante 22 est utilisée en tant que moteur ou en tant qu'alternateur, comme exposé précédemment.

En variante, les moyens d'accouplement 20 sont constitués non pas d'un embrayage mais d'un crabot qui, pour permettre l'accouplement du moteur 18 et de la machine tournante 22, nécessite une position relative prédéterminée entre les arbres de ces deux éléments. Dans ce mode de réalisation, les capteurs de vitesse 56 et 58 sont remplacés par des capteurs de position des arbres du moteur 18 et de la machine tournante 22 et une régulation est effectuée pour que la synchronisation des positions soit effectuée avant l'engagement des moyens d'accouplement.

Pour le désenclenchement des moyens 20, le levier de commande 52 reste en position et l'ordre est donné par le commutateur 54. Après réception de l'ordre par l'unité centrale de traitement d'informations 50, le moteur thermique principal 18 est soulagé progressivement par la machine électrique tournante 22. L'unité de régulation 72 commande la machine électrique tournante 22 par une rampe de couple. Lorsque l'unité de régulation 68 du moteur thermique principal 18 détecte un fonctionnement à vide du moteur thermique 18, par exemple par une mesure de puissance inférieure à 10% de la puissance nominale, l'ordre de désenclenchement est donné par l'unité centrale de traitement d'informations 50 aux moyens 20.

## Revendications

1. Chaîne de propulsion (8) pour navire (6) comportant :
- un moteur thermique principal (18),
- au moins une centrale (26) de production d'énergie électrique secondaire alimentant un tableau de distribution (34) ;
- au moins une ligne d'arbre (16) pourvue d'une hélice (14) d'extrémité et accouplée mécaniquement au moteur thermique principal (18) pour son entraînement,
- au moins une machine électrique tournante (22) accouplée mécaniquement à la ligne d'arbre (16) et alimentée depuis le tableau de distribution (34),
- un moyen (20) d'accouplement mécanique libérable du moteur thermique principal (18) et de la machine électrique tournante (22) disposé sur la ligne d'arbre (16), entre la machine électrique tournante (22) et le moteur thermique principal (18),
**caractérisée en ce qu'**elle comporte des moyens (60) de synchronisation des vitesses de la machine électrique tournante (22) et du moteur thermique principal (18) avant l'accouplement de la machine électrique tournante (22) et du moteur thermique principal (18) et des moyens (90) d'engagement des moyens d'accouplement lorsque les vitesses de la machine électrique tournante (22) et du moteur thermique principal (18) sont sensiblement égales.

2. Chaîne de propulsion selon la revendication 1, **caractérisée en ce que** le moteur thermique principal (18) est un moteur 2 temps.

3. Chaîne de propulsion selon l'une quelconque des revendications précédentes, **caractérisée en ce qu'**un palier-butée (24) propre à transmettre une poussée suivant l'axe de la ligne d'arbre (16) à la coque du navire (10) est installé entre l'hélice (14) et le moyen (20) d'accouplement mécanique libérable.

4. Chaîne de propulsion selon la revendication3, **caractérisée en ce que** le palier-butée (24) est intégré à la machine électrique tournante (22).

5. Chaîne de propulsion selon l'une quelconque des revendications précédentes, **caractérisée en ce que** le moyen d'accouplement mécanique libérable du moteur thermique principal (18) et de la machine électrique tournante (22) est un embrayage (20).

6. Chaîne de propulsion selon l'une quelconque des revendications précédentes, **caractérisée en ce qu'**elle comporte une unité de pilotage propre à assurer, lors de phases de manoeuvre du navire, une déconnexion mécanique du moteur thermique principal (18) de la ligne d'arbre par libération du moyen d'accouplement mécanique (20) et une alimentation en courant électrique de la machine tournante (22) grâce à l'énergie fournie par le tableau de distribution (34) et issue de la centrale (26) de production d'énergie électrique secondaire.

7. Chaîne de propulsion selon l'une quelconque des revendications précédentes, **caractérisée en ce que** la ligne d'arbre (16) est reliée, sans réducteur de vitesse, au moteur thermique (18) de sorte que l'hélice est entraînée en rotation à la vitesse de rotation du moteur thermique principal (18).

8. Chaîne de propulsion selon l'une quelconque des revendications précédentes, **caractérisée en ce qu'**elle comporte un convertisseur réversible (38) de mise en forme du courant électrique relié entre la machine électrique tournante (22) et le tableau de distribution électrique (34), lequel tableau de distribution électrique (34) est relié en outre à un réseau de distribution électrique (36) du navire.

9. Chaîne de propulsion selon l'une quelconque des revendications précédentes, **caractérisée en ce qu'**elle comporte une turbine (33) de récupération d'énergie sur l'échappement du moteur thermique principal (18), laquelle turbine (33) est accouplée mécaniquement à un alternateur (32) dont la sortie d'alimentation électrique est reliée au tableau de distribution électrique (34).

10. Chaîne selon l'une quelconque des revendications précédentes, **caractérisée en ce que** la machine électrique tournante (22) comporte un rotor monté autour de l'axe de la ligne d'arbre (16).

11. Chaîne de propulsion selon l'une quelconque des revendications précédentes, **caractérisée en ce que** les moyens de synchronisation (60) comportent des moyens (72) de réglage du couple de consigne (C22) de la machine électrique tournante (22).

12. Chaîne de propulsion selon l'une quelconque des revendications précédentes, **caractérisée en ce que** les moyens de synchronisation (60) comportent des capteurs de vitesse (56, 58) mesurant les vitesses de rotation du moteur thermique principal (18) et de la machine tournante (22).

13. Chaîne de propulsion selon l'une quelconque des revendications précédentes, **caractérisée en ce que** les moyens de synchronisation (60) comportent des capteurs de position disposés sur le moteur thermique principal (18) et la machine tournante (22).

14. Chaîne de propulsion selon la revendication 13, **caractérisée en ce qu'**elle comporte des moyens (60) de synchronisation des positions angulaires relatives de la machine électrique tournante (22) et du moteur thermique principal (18) avant l'accouplement de la machine électrique tournante (22) et du moteur thermique principal (18), les moyens (90) d'engagement du moyen d'accouplement (20) sont adaptés pour assurer l'engagement du moyen d'accouplement (20) lorsque les positions angulaires de la machine électrique tournante (22) et du moteur thermique principal (18) sont dans des positions relatives prédéterminées.

15. Navire (8) comportant une coque (10) et une chaîne de propulsion selon l'une quelconque des revendications précédentes.

## Claims

1. A drive train (8) for a vessel (6) including:
- a primary heat engine (18),
- at least one secondary electricity production unit (26) powering a feeder panel (34);
- at least one shaft line (16) provided with an end propeller (14) and mechanically coupled to a primary heat engine (18) for driving thereof,
- at least one rotary electrical machine (22) mechanically coupled to the shaft line (16) and powered from the feeder panel (34);
- a releasable mechanical coupling means (20) for the primary heat engine (18) and the rotary electrical machine (22) arranged on the shaft line (16), between the rotary electrical machine (22) and the primary heat engine (18),
**characterized in that** it includes means (60) for synchronizing the speeds of the rotary electrical machine (22) and the primary heat engine (18) before coupling the rotary electrical machine (22) and the primary heat engine (18) and means (90) for engaging coupling means when the speeds of the rotary electrical machine (22) and the primary heat engine (18) are substantially equal.

2. The drive train according to claim 1, **characterized in that** the primary heat engine (18) is a two-stroke engine.

3. The drive train according to any one of the preceding claims, **characterized in that** a bearing-stop (24) capable of transmitting thrust along the axis of the shaft line (16) to the hull of the vessel (10) is installed between the propeller (14) and the releasable mechanical coupling means (20).

4. The drive train according to claim 3, **characterized in that** the bearing-stop (24) is incorporated into the rotary electrical machine (22).

5. The drive train according to any one of the preceding claims, **characterized in that** the releasable mechanical coupling means of the primary heat engine (18) and the rotary electrical machine (22) is a clutch (20).

6. The drive train according to any one of the preceding claims, **characterized in that** it includes a control unit capable of ensuring, during maneuvering phases of the vessel, a mechanical disconnection of the primary heat engine (18) from the shaft line by releasing the mechanical coupling means (20) and providing the rotary machine (22) with electrical current owing to the energy supplied by the feeder panel (34) and coming from the secondary electricity production unit (26).

7. The drive train according to any one of the preceding claims, **characterized in that** the shaft line (16) is connected to the heat engine (18) without a reduction gear, such that the propeller is rotated at the speed of rotation of the primary heat engine (18).

8. The drive train according to any one of the preceding claims, **characterized in that** it includes a reversible converter (38) for shaping the electrical current connected between the rotary electrical machine (22) and the electrical feeder panel (34), said electrical feeder panel (34) further being connected to an electricity distribution grid (36) of the vessel.

9. The drive train according to any one of the preceding claims, **characterized in that** it includes a turbine (33) for recovering energy from the exhaust of the primary heat engine (18), said turbine (33) being mechanically coupled to an alternator (32) whereof the electricity output is connected to the electrical feeder panel (34).

10. The drive train according to any one of the preceding claims, **characterized in that** the rotary electrical machine (22) includes a rotor mounted around the axis of the shaft line (16).

11. The drive train according to any one of the preceding claims, **characterized in that** the synchronization means (60) include means (72) for adjusting the torque set value (C22) of the rotary electrical machine (22).

12. The drive train according to any one of the preceding claims, **characterized in that** the synchronization means (60) include speed sensors (56, 58) measuring the speeds of rotation of the primary heat engine (18) and the rotary machine (22).

13. The drive train according to any one of the preceding claims, **characterized in that** the synchronization means (60) include position sensors arranged on the primary heat engine (18) and the rotary machine (22).

14. The drive train according to claim 13, **characterized in that** it includes means (60) for synchronizing relative angular positions of the rotary electrical machine (22) and the primary heat engine (18) before coupling of the rotary electrical machine (22) and the primary heat engine (18), the means (90) for engaging the coupling means (20) are suitable for ensuring engagement of the coupling means (20) when the angular positions of the rotary electrical machine (22) and the primary heat engine (18) are in predetermined relative positions.

15. A vessel (8) including a hull (10) and a drive train according to any one of the preceding claims.

## Patentansprüche

1. Antriebssystem (8) für ein Schiff (6), das aufweist:
- einen Haupt-Verbrennungsmotor (18),
- mindestens eine sekundäre Zentrale (26) für die Produktion von elektrischer Energie, die eine Verteilungstafel (34) versorgt,
- mindestens einen Wellenstrang (16), der am Ende mit einer Schraube (14) ausgestattet ist und für seinen Antrieb mechanisch an den Haupt-Verbrennungsmotor (18) gekoppelt ist,
- mindestens eine drehende Elektromaschine (22), die mechanisch an den Wellenstrang (16) gekoppelt ist und von der Verteilungstafel (34) versorgt wird,
- ein vom Haupt-Verbrennungsmotor (18) und von der drehenden Elektromaschine (22) freisetzbares mechanisches Kopplungsmittel (20), das auf dem Wellenstrang (16) zwischen der drehenden Elektromaschine (22) und dem Haupt-Verbrennungsmotor (18) angeordnet ist,
**dadurch gekennzeichnet, dass** es Synchronisationsmittel (60) der Geschwindigkeiten der drehenden Elektromaschine (22) und des Haupt-Verbrennungsmotors (18) vor der Kopplung der drehenden Elektromaschine (22) und des Haupt-Verbrennungsmotors (18) und Eingriffmittel (90) der Kopplungsmittel, wenn die Geschwindigkeiten der drehenden Elektromaschine (22) und des Haupt-Verbrennungsmotors (18) etwa gleich sind, aufweist.

2. Antriebssystem nach Anspruch 1, **dadurch gekennzeichnet, dass** der Haupt-Verbrennungsmotor (18) ein Zweitaktmotor ist.

3. Antriebssystem nach einem der vorangehenden Ansprüche, **dadurch gekennzeichnet, dass** ein Drucklager (24), das imstande ist, einen Druck gemäß der Achse des Wellenstrangs (16) auf den Schiffsrumpf (10) zu übertragen, zwischen der Schraube (14) und dem freisetzbaren mechanischen Kopplungsmittel (20) installiert ist.

4. Antriebssystem nach Anspruch 3, **dadurch gekennzeichnet, dass** das Drucklager (24) in der drehenden Elektromaschine (22) integriert ist.

5. Antriebssystem nach einem der vorangehenden Ansprüche, **dadurch gekennzeichnet, dass** das vom Haupt-Verbrennungsmotor (18) und von der drehenden Elektromaschine (22) freisetzbare mechanische Kopplungsmittel eine Kupplung (20) ist.

6. Antriebssystem nach einem der vorangehenden Ansprüche, **dadurch gekennzeichnet, dass** es eine Lenkungseinheit aufweist, die imstande ist, während der Manövrierphasen des Schiffs eine mechanische Trennung des Haupt-Verbrennungsmotors (18) vom Wellenstrang durch Freisetzen des mechanischen Kopplungsmittels (20) und eine Versorgung der drehenden Maschine (22) mit elektrischem Strom dank der von der Verteilungstafel (34) gelieferten und von der sekundären Zentrale (26) für die Produktion von elektrischer Energie ausgehenden Energie sicherzustellen.

7. Antriebssystem nach einem der vorangehenden Ansprüche, **dadurch gekennzeichnet, dass** der Wellenstrang (16) mit dem Verbrennungsmotor (18) ohne Untersetzungsgetriebe derart verbunden ist, dass die Schraube mit der Rotationsgeschwindigkeit des Haupt-Verbrennungsmotors (18) rotierend angetrieben wird.

8. Antriebssystem nach einem der vorangehenden Ansprüche, **dadurch gekennzeichnet, dass** es zwischen der drehenden Elektromaschine (22) und der elektrischen Verteilungstafel (34) einen Zwei-Energierichtung-Stromrichter (38) zum Formen des elektrischen Stroms aufweist, wobei die elektrische Verteilungstafel (34) ferner mit einem elektrischen Verteilungsnetz (36) des Schiffs verbunden ist.

9. Antriebssystem nach einem der vorangehenden Ansprüche, **dadurch gekennzeichnet, dass** es auf dem Auspuff des Haupt-Verbrennungsmotors (18) eine Turbine (33) für die Rückgewinnung von Energie aufweist, wobei die Turbine (33) mechanisch mit einem Wechselstromgenerator (32) gekoppelt ist, dessen elektrischer Versorgungsausgang mit der elektrischen Verteilungstafel (34) verbunden ist.

10. System nach einem der vorangehenden Ansprüche, **dadurch gekennzeichnet, dass** die drehende Elektromaschine (22) einen um die Achse des Wellenstrangs (16) montierten Rotor aufweist.

11. Antriebssystem nach einem der vorangehenden Ansprüche, **dadurch gekennzeichnet, dass** die Synchronisationsmittel (60) Einstellmittel (72) des Soll-Drehmoments (C22) der drehenden Elektromaschine (22) aufweisen.

12. Antriebssystem nach einem der vorangehenden Ansprüche, **dadurch gekennzeichnet, dass** die Synchronisationsmittel (60) Geschwindigkeitssensoren (56, 58) aufweisen, die die Rotationsgeschwindigkeiten des Haupt-Verbrennungsmotors (18) und der drehenden Maschine (22) messen.

13. Antriebssystem nach einem der vorangehenden Ansprüche, **dadurch gekennzeichnet, dass** die Synchronisationsmittel (60) Positionssensoren aufweisen, die auf dem Haupt-Verbrennungsmotor (18) und der drehenden Maschine (22) angeordnet sind.

14. Antriebssystem nach Anspruch 13, **dadurch gekennzeichnet, dass** es Synchronisationsmittel (60) der relativen Winkelpositionen der drehenden Elektromaschine (22) und des Haupt-Verbrennungsmotors (18) vor der Kopplung der drehenden Elektromaschine (22) und des Haupt-Verbrennungsmotors (18) aufweist, wobei die Eingriffmittel (90) des Kopplungsmittels (20) ausgebildet sind, um den Eingriff des Kopplungsmittels (20) sicherzustellen, wenn die Winkelpositionen der drehenden Elektromaschine (22) und des Haupt-Verbrennungsmotors (18) in vorbestimmten relativen Positionen sind.

15. Schiff (8), das einen Rumpf (10) und ein Antriebssystem nach einem der vorangehenden Ansprüche aufweist.
